(19)

Europäisches
Patentamt
European
Patent Office
Office européen
des brevets

(11) **EP 3 936 478 A1**

(12) **EUROPEAN PATENT APPLICATION**
published in accordance with Art. 153(4) EPC

(43) Date of publication:
**12.01.2022 Bulletin 2022/02**

(21) Application number: **20767364.1**

(22) Date of filing: **02.03.2020**

(51) Int Cl.:
**C01B 32/318** [(2017.01)]    **B01J 20/20** [(2006.01)]
**B01J 20/28** [(2006.01)]    **B01J 20/30** [(2006.01)]

(86) International application number:
**PCT/JP2020/008740**

(87) International publication number:
**WO 2020/179745 (10.09.2020 Gazette 2020/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.03.2019 JP 2019040787**

(71) Applicant: **Kuraray Co., Ltd.**
**Kurashiki-shi, Okayama 710-0801 (JP)**

(72) Inventors:
• **NISHITA, Mitsunori**
  **Bizen-shi, Okayama 705-0025 (JP)**
• **HITOMI, Mitsunori**
  **Bizen-shi, Okayama 705-0025 (JP)**
• **YAMADA, Takayuki**
  **Bizen-shi, Okayama 705-0025 (JP)**

(74) Representative: **Müller-Boré & Partner**
**Patentanwälte PartG mbB**
**Friedenheimer Brücke 21**
**80639 München (DE)**

(54) **ACTIVATED CARBON AND METHOD FOR PRODUCING THE SAME**

(57)    The present invention relates to an activated carbon, having a BET specific surface area (A) of 1,250 to 1,800 m²/g as determined from a carbon dioxide adsorption isotherm, and a ratio (B)/(C) of 0.640 or lower between a pore volume (B) mL/g at a pore diameter of 0.4 to 0.7 nm and a pore volume (C) mL/g at a pore diameter of 0.7 to 1.1 nm as determined by performing a grand canonical Monte Carlo simulation on a carbon dioxide adsorption-desorption isotherm.

EP 3 936 478 A1

**Description**

TECHNICAL FIELD

The present invention relates to an activated carbon and a method of producing the same.

BACKGROUND ART

For example, in automobiles, canisters capable of adsorbing and desorbing evaporated fuel are used for inhibiting the release of evaporated fuel to the outside from vehicle fuel tanks. In such canisters, an activated carbon is generally used as an adsorbent, and the activated carbon temporarily adsorbs or traps evaporated fuel coming from a fuel tank when the vehicle is stopped, and desorbs the adsorbed evaporated fuel by replacing it with the intake fresh air when the vehicle is driven. The desorbed evaporated fuel is burned in an internal-combustion engine.

As the activated carbon in such canisters, those having fine pores for adsorbing evaporated fuel are widely used.

With regard to such activated carbons, for example, Patent Document 1 discloses a highactivity and high-density activated carbon produced from lignocellulose, which has a butane working capacity of 15 to 25 g/100 cm$^3$ and, based on a total pore volume, a porosity of 50% or higher for pores with a diameter of 1.8 to 50 nm and a porosity of 20% or lower for pores having a diameter of greater than 50 nm. This document discloses that the activated carbon can be produced by adjusting the moisture content and the heating temperature of a carbonaceous material and subsequently pelletizing the carbonaceous material using an extrusion molding machine and a pin mixer, followed by heat-calcining. However, in the production method described in Patent Document 1, it is difficult to produce an activated carbon with a stable quality while maintaining a high productivity; therefore, in order to solve this problem, Patent Document 2 discloses a method of producing an activated carbon, which method includes: the plasticization and densification step of plasticizing and densifying a mixture of a wooden material and a phosphoric acid compound using a single-screw or twin-screw extrusion kneader under kneading and heating conditions until a loss on 30-minute heating at 140°C is more than 10% by mass but less than 25% by mass so as to obtain a carbonaceous material; the adjustment step of obtaining a heat-treated carbonaceous material by heat-treating the carbonaceous material obtained by the plasticization and densification step until a loss on 30-minute heating at 140°C is more than 3% by mass but less than 12% by mass; and the activation treatment step of activating the carbonaceous material obtained by the adjustment step under a heating condition of 400°C to 600°C. Patent Document 2 also discloses an activated carbon produced by this method.

Further, Patent Document 3 discloses a chemically-activated and molded activated carbon suitable for adsorption and desorption of hydrophobic organic compounds, which has a packing density of 0.25 to 0.6 g/cm$^3$, a pore volume of 0.5 to 1.2 cm$^3$/g, a [packing density $\times$ pore volume] value of 0.25 to 0.4 cm$^3$/cm$^3$, a surface area of 1,000 m$^2$/g or larger, a [packing density $\times$ surface area] value of not less than 400 m$^2$/cm$^3$, an average pore size of 18 to 35 Å, and a butane effective adsorption amount of 5.0 to 15 g/100 mL.

PRIOR ART DOCUMENTS

PATENT DOCUMENTS

[Patent Document 1] Japanese Laid-Open Patent Publication No. H6-56416
[Patent Document 2] WO 2018/21246
[Patent Document 3] Japanese Laid-Open Patent Publication No. H2-167809

SUMMARY OF THE INVENTION

PROBLEMS TO BE SOLVED BY THE INVENTION

An activated carbon for a canister is required to have a high adsorption performance so that it can trap evaporated fuel to be generated. However, the activated carbons disclosed in Patent Documents 2 and 3 do not have a sufficient butane saturated adsorption performance, and there is a demand for an activated carbon with superior adsorption performance.

An activated carbon for a canister is also required to have a small amount of residual evaporated fuel after desorption. Particularly, as compared to a residue that is irreversibly adsorbed in the early stage of adsorption-desorption cycles, a residue that remains through repeated adsorption-desorption cycles is easily released into the atmosphere by an air temperature change, adsorptive displacement (displacement between evaporated fuel and residue) or the like;

therefore, as an index for evaluating excellent desorption performance, the present inventors focused on a small butane residual amount even after repeated adsorption-desorption cycles.

Accordingly, an object of the present invention is to provide: an activated carbon which has a high butane saturated adsorption rate in combination with a small butane residual amount even after repeated adsorption-desorption cycles; and a method of producing the same.

MEANS FOR SOLVING PROBLEMS

The present inventors intensively studied to discover that the above-described problem can be solved by an activated carbon having specific values of a BET specific surface area (A) and a pore volume ratio (B)/(C), thereby completing the present invention.

The present invention encompasses the following preferred embodiments.

[1] An activated carbon, having a BET specific surface area (A) of 1,250 to 1,800 $m^2/g$ as determined from a carbon dioxide adsorption isotherm, and a ratio (B)/(C) of 0.640 or lower between a pore volume (B) mL/g at a pore diameter of 0.4 to 0.7 nm and a pore volume (C) mL/g at a pore diameter of 0.7 to 1.1 nm as determined by performing a grand canonical Monte Carlo simulation on a carbon dioxide adsorption-desorption isotherm.

[2] The activated carbon according to [1], wherein the BET specific surface area (A), the pore volume (B), and the pore volume (C) satisfy a relationship represented by the following formula: (A) $\times$ (B)/(C) $\leq$ 1,050.

[3] The activated carbon according to [1] or [2], wherein the pore volume (B) is 0.135 mL/g or less.

[4] The activated carbon according to any one of [1] to [3], wherein a pore volume (D) at a pore diameter of 0.6 to 0.7 nm, which is determined by performing the grand canonical Monte Carlo simulation on the carbon dioxide adsorption-desorption isotherm, is 0.050 mL/g or less.

[5] The activated carbon according to any one of [1] to [4]; which is in the form of pellets.

[6] The activated carbon according to any one of [1] to [5], which is a phosphoric acid-activated carbon.

[7] A method of producing the activated carbon according to [6], the method comprising:

    (i) the step of mixing sawdust with a phosphoric acid compound;
    (ii) the step of heating the resulting mixture to reduce the mass of phosphoric acid and sawdust in the mixture by 5 to 20% by mass based on a dry-state total mass of phosphoric acid and sawdust;
    (iii) the step of molding the thus mass-reduced mixture;
    (iv) the step of oxidizing the thus obtained molded product by heating in the presence of oxygen;
    (v) the step of calcining the thus oxidized molded product in an atmosphere of an inert gas or a gas that does not react with the oxidized molded product at a calcining temperature; and
    (vi) the step of water-washing and then drying the thus calcined molded product.

[8] The method according to [7], comprising kneading the mixture obtained in the step (i) simultaneously with the heating in the step (ii), in an independent step between the step (ii) and the step (iii), or immediately before the molding in the step (iii).

[9] The activated carbon according to any one of [1] to [6], which is an activated carbon for an automobile canister.

EFFECTS OF THE INVENTION

According to the present invention, an activated carbon which has a high butane saturated adsorption rate in combination with a small butane residual amount even after repeated adsorption-desorption cycles, and a method of producing the same can be provided.

MODE FOR CARRYING OUT THE INVENTION

Embodiments of the present invention will now be described in detail. It is noted here, however, that the scope of the present invention is not restricted to the below-described embodiments, and a variety of modifications can be made within a range that does not impair the gist of the present invention.

[Activated Carbon]

In the activated carbon of the present invention, a BET specific surface area (A) determined from a carbon dioxide adsorption isotherm [hereinafter, may be simply referred to as "BET specific surface area (A)"] is 1,250 to 1,800 $m^2/g$, and a ratio (B)/(C) between a pore volume (B) mL/g at a pore diameter of 0.4 to 0.7 nm and a pore volume (C) mL/g at a pore diameter of 0.7 to 1.1 nm, which is determined by performing a grand canonical Monte Carlo simulation on a carbon dioxide adsorption-desorption isotherm, is 0.640 or lower.

By having a certain BET specific surface area (A) determined from a carbon dioxide adsorption isotherm as well as a certain pore volume ratio (B)/(C), the activated carbon of the present invention can have a high butane saturated adsorption rate in combination with a small butane residual amount even after repeated adsorption-desorption cycles.

The reason why the present inventors focused on an analysis using a carbon dioxide adsorption-desorption isotherm is as follows.

In order to obtain excellent butane adsorption performance (high butane saturated adsorption rate), it is important to allow micropores to develop among pores of an activated carbon. Meanwhile, in an activated carbon in which extremely small micropores (pores having a pore diameter of 0.7 nm or smaller, which are called ultramicropores) are developed, evaporated fuel is unlikely to be desorbed from the activated carbon when the activated carbon is used in a canister. Accordingly, in order to realize the desired butane desorption performance in addition to the desired butane adsorption performance, it is necessary to allow micropores to develop while inhibiting the formation of ultramicropores. Therefore, attention was focused on an analysis using a carbon dioxide adsorption-desorption isotherm as a method of evaluating micropores, particularly pores of 1 nm or smaller.

Next, the butane residual amount after adsorption-desorption cycles according to the present invention will be described.

In the present invention, as described below in the section of Examples, up to 100 adsorption-desorption cycles in which a process of allowing butane to be adsorbed to and then desorbed from an activated carbon is defined as one cycle are performed, and the rate of increase in the butane residual amount after the adsorption-desorption cycles of the activated carbon is determined using an average value in the 2nd to the 6th cycles and an average value in the 96th to the 100th cycles (see the formula below). A low butane residual amount increase rate means that the activated carbon has excellent desorption performance.

[Formula 1]

Butane residual amount increase rate (%)
= {("Average value of butane residual amount in 96th to 100th cycles" - "Average value of butane residual amount in 2nd to 6th cycles")/"Average value of butane residual amount in 2nd to 6th cycles"} × 100

The adsorption-desorption behavior in the 1st cycle is usually largely different from that in the 2nd and later cycles; therefore, it is considered inappropriate to use the adsorption-desorption behavior in the 1st cycle for the evaluation of an activated carbon for a canister. Accordingly, in the present invention, focus was given to the amount of increase in the butane residual amount on average during the later cycle stage of the 96th to the 100th cycles with respect to an average value of the butane residual amount in the cycle early stage (the 2nd to the 6th cycles) excluding the 1st cycle. Further, in order to reduce the measurement error, an average value of the butane residual amount during five cycles in each of the cycle early stage and the cycle later stage, rather than the butane residual amount of a single cycle in each of the cycle early stage and the cycle later stage, was used.

For example, when an activated carbon is evaluated based on the adsorption performance reduction rate as described in Cited Document 2, the butane residual amount may vary even if the adsorption performance reduction rate is the same. In addition, the evaluation method used in this document is a method of evaluating an activated carbon based on a value of gasoline adsorption performance after 200 cycles with respect to an initial value of gasoline adsorption performance (value in the 1st cycle) that is different from the gasoline adsorption performance in the 2nd and later cycles.

The evaluation method of the present invention is different from the evaluation method described in Cited Document 2 in that the evaluation method of the present invention can evaluate the adsorption-desorption performance of an activated carbon more accurately.

The activated carbon of the present invention has a BET specific surface area (A), which is determined from a carbon dioxide adsorption isotherm, of 1,250 to 1,800 m$^2$/g.

When the BET specific surface area (A) is considerably smaller than 1,250 m$^2$/g, a sufficient adsorption performance cannot be obtained due to a small amount of pores to which butane can adsorb. The amount of pores to which butane can adsorb increases as the BET specific surface area (A) increases toward 1,250 m$^2$/g; however, it is believed that, when the BET specific surface area(A) is smaller than 1,250 m$^2$/g, pores in which adsorbed butane is easily fixed (i.e. from which adsorbed butane is unlikely to be desorbed) are developed, and this leads to an increase in the butane residual amount In addition, it is believed that repeated adsorption-desorption cycles cause pores blocked by residual butane to exist in a significant amount, as a result of which the butane adsorption amount in the subsequent cycles is reduced as well.

On the other hand, when the BET specific surface area (A) determined from a carbon dioxide adsorption isotherm is 1,800 m²/g or larger, it is believed that the above-described pores from which adsorbed butane is unlikely to be desorbed are considerably developed and this contributes to an increase of the BET specific surface area (A), as a result of which the butane residual amount is increased and the butane adsorption amount after repeated adsorption-desorption cycles is reduced. Further, since the packing density is excessively reduced and this makes it difficult to ensure a high butane working capacity (hereinafter, also referred to as "BWC"), such a BET specific surface area (A) is not preferred for an activated carbon to be used in a canister.

The BET specific surface area (A) is preferably 1,275 m²/g or larger, more preferably 1,300 m²/g or larger, still more preferably 1,400 m²/g or larger, but preferably 1,775 m²/g or smaller, more preferably 1,750 m²/g or smaller. When the BET specific surface area (A) is in this range, the desired adsorption performance, desorption performance, and packing density are likely to be obtained.

In the activated carbon of the present invention, a ratio (B)/(C) between a pore volume (B) mL/g at a pore diameter of 0.4 to 0.7 nm and a pore volume (C) mL/g at a pore diameter of 0.7 to 1.1 nm is 0.640 or lower.

A pore volume ratio (B)/(C) of higher than 0.640 means that either the pore volume (B) is excessively larger or the pore volume (C) is excessively small and, in either case, the desired desorption performance cannot be obtained. The pore volume ratio (B)/(C) is preferably 0.600 or lower, more preferably 0.570 or lower. When the pore volume ratio (B)/(C) is equal to or lower than the above-described upper limit value, the development of pores from which adsorbed butane is unlikely to be desorbed is inhibited while pores that adsorb and desorb butane in a favorable manner are developed; therefore, an increase in the butane residual amount as well as a reduction in the butane adsorption amount after repeated adsorption-desorption cycles are likely to be inhibited.

The pore volume ratio (B)/(C) is preferably 0.450 or higher, more preferably 0.470 or higher. A low pore volume ratio (B)/(C) means that either the pore volume (B) is small or the pore volume (C) is large. When the pore volume ratio (B)/(C) is equal to or higher than the above-described lower limit value, the desired adsorption performance is likely to be obtained.

The BET specific surface area (A), the pore volume ratio (B)/(C), and the below-described pore volumes (B), (C) and (D) can be adjusted to the desired values by adjusting, for example, the mass ratio of a phosphoric acid compound and sawdust in the step (i), the mass reduction rate in the step (ii), and/or the oxidizing conditions in the step (iv) in the below-described method of producing an activated carbon. Particularly, by satisfying a specific mass reduction rate and specific oxidizing conditions in the below-described method of producing an activated carbon, the specific BET specific surface area (A) and the specific pore volume ratio (B)/(C) according to the present invention can be obtained. The BET specific surface area (A), the pore volume ratio (B)/(C), and the below-described pore volumes (B), (C) and (D) can be determined by the respective methods described below in the section of Examples.

In a preferred embodiment, the BET specific surface area (A), the pore volume (B), and the pore volume (C) satisfy a relationship represented by the following formula: $(A) \times (B)/(C) \le 1,050$. The value of $[(A) \times (B)/(C)]$ is preferably 1,000 or smaller, more preferably 950 or smaller. When this value is equal to or smaller than the above-described upper limit value, the amount of pores in which butane remains is believed to be small, and a low butane residual amount increase rate is likely to be obtained even after adsorption-desorption cycles. The value of $[(A) \times (B)/(C)]$ is preferably 800 or larger, more preferably 825 or larger. When this value is equal to or larger than the above-described lower limit value, the desired adsorption amount is likely to be obtained.

The pore volume (B) at a pore diameter of 0.4 to 0.7 nm is preferably 0.135 mL/g or less, more preferably 0.125 mL/g or less, particularly preferably 0.120 mL/g or less. When the pore volume (B) is equal to or less than the above-described value, excessive development of pores from which adsorbed butane is unlikely to be desorbed is believed to be inhibited, and an increase in the butane residual amount as well as a reduction in the butane adsorption amount after repeated adsorption-desorption cycles tend to be inhibited.

The pore volume (B) is preferably 0.100 mL/g or larger, more preferably 0.110 mL/g or larger. When the pore volume (B) is equal to or larger than the above-described value, the desired butane adsorption amount is likely to be obtained.

The amount of pores that adsorb and desorb butane in a favorable manner tends to increase as the pore volume (C) at a pore diameter of 0.7 to 1.1 nm is increased. However, an excessively large pore volume (C) means a shift of the pore size distribution to the larger side and a reduction in the pore volume (B), which leads to a reduction in the pore volume ratio (B)/(C). Consequently, the desired adsorption performance is unlikely to be obtained. Further, an excessively large pore volume (C) leads to a reduction in the BET specific surface area (A) and a reduction in the packing density. An excessive reduction in the packing density causes a reduction in the BWC, which is not preferred for an activated carbon to be used in a canister.

The pore volume (D) at a pore diameter of 0.6 to 0.7 nm is preferably 0.050 mL/g or less, more preferably 0.047 mL/g or less, particularly preferably 0.045 mL/g or less. The pore volume (D) is, for example, 0.030 mL/g or larger, preferably 0.035 mL/g or larger, more preferably 0.040 mL/g or larger.

When the activated carbon of the present invention has a pore volume (D) of not larger than the above-described upper limit value in addition to the specific BET specific surface area (A) and the specific pore volume ratio (B)/(C), it is believed that the amount of pores causing an increase in the butane residual amount during the process of repeating adsorption-desorption cycles is further reduced, so that a low butane residual amount increase rate is likely to be obtained.

From the viewpoint of weight reduction of the activated carbon, the packing density of the activated carbon of the present invention is preferably 0.330 g/mL or lower, more preferably 0.315 g/mL or lower, still more preferably 0.300 g/mL or lower. From the viewpoint of the strength of the activated carbon, the packing density is preferably 0.220 g/mL or higher. The packing density can be adjusted to a value of not larger than the above-described upper limit value and not smaller than the above-described lower limit value by adjusting the mass reduction rate in the step (ii), the molding pressure condition in the step (iii), and/or the oxidizing conditions in the step (iv) in the below-described method of producing an activated carbon. The packing density can be measured in accordance with ASTM D2854.

The shape of the activated carbon of the present invention is not particularly limited, and may be any of a crushed shape, a granular shape, and a pellet shape (e.g., a spherical, cylindrical, or plate shape), or may be a blend of different shapes. From the viewpoint of ease to obtain excellent adsorption performance, desorption performance, air permeability or low fine powder content, the activated carbon of the present invention is preferably in the form of pellets. Accordingly, in a preferred embodiment of the present invention, the activated carbon is in the form of pellets. As for the dimensions of the activated carbon in the form of pellets, from the viewpoint of ease to obtain preferred air permeability and packing density: when the activated carbon has a spherical shape, the average particle size is preferably 1 to 9 mm, more preferably 2 to 7 mm; or when the activated carbon has a cylindrical shape, the average cylinder outer diameter and the average cylinder length are preferably 1 to 9 mm and 2 to 12 mm, more preferably 2 to 7 mm and 4 to 10 mm, respectively. The average particle size, the average cylinder outer diameter, and the average cylinder length can be measured by a common method (e.g., a measurement method using a caliper).

In one embodiment of the present invention, the activated carbon of the present invention is an activated carbon obtained by performing activation with a phosphoric acid compound. Accordingly, in this embodiment, the activated carbon is a phosphoric acid-activated carbon. The activation with a phosphoric acid compound will be described below in the section of [Method of Producing Activated Carbon].

The "butane saturated adsorption rate" of the activated carbon of the present invention refers to the butane adsorption performance (butane activity, unit: % by mass) prescribed in ASTM D5228, and it can be measured in accordance with ASTM D5228. The butane saturated adsorption rate is preferably 63.5% or higher, more preferably 68.0% or higher. The butane saturated adsorption rate can be adjusted to the above-described value or higher by, for example, adjusting the mass ratio of a phosphoric acid compound and sawdust, the mass reduction rate, the oxidizing conditions, the activation degree or the like in a production method. The activated carbon of the present invention has a high butane saturated adsorption rate. This enables to obtain a sufficient adsorption capacity while reducing the weight of a canister when the activated carbon is packed into the canister, even at a low packing density.

The butane residual amount increase rate of the activated carbon of the present invention is preferably 15.0% or lower, more preferably 10.0% or lower. A lower butane residual amount increase rate means superior desorption performance, which is preferred in the present invention. The butane residual amount increase rate can be adjusted to the above-described value or lower by, for example, adjusting the mass ratio of a phosphoric acid compound and sawdust, the mass reduction rate, the oxidizing conditions, the activation degree or the like in a production method. The butane residual amount increase rate can be determined by the method described below in the section of Examples.

As described above, the activated carbon of the present invention has a high butane saturated adsorption rate in combination with a low butane residual amount increase rate even after repeated adsorption-desorption cycles. Therefore, the activated carbon of the present invention can be preferably used as an activated carbon for an automobile canister. Accordingly, in one embodiment, the activated carbon of the present invention is an activated carbon for an automobile canister. It is noted here that the activated carbon of the present invention can also be used for various evaporated fuels, such as ordinary gasolines that are common automobile fuels, and alcohol-containing gasolines.

[Method of Producing Activated Carbon]

The activated carbon of the present invention can be produced by, for example, a production method comprising:

(i) the step of mixing sawdust with a phosphoric acid compound;
(ii) the step of heating the resulting mixture to reduce the mass of phosphoric acid and sawdust in the mixture by 5 to 20% by mass based on a dry-state total mass of phosphoric acid and sawdust;
(iii) the step of molding the thus mass-reduced mixture;
(iv) the step of oxidizing the thus obtained molded product by heating in the presence of oxygen;
(v) the step of calcining the thus oxidized molded product in an atmosphere of an inert gas or a gas that does not react with the oxidized molded product at a calcining temperature; and
(vi) the step of water-washing and then drying the thus calcined molded product.

[Step (i)]

As the sawdust, for example, sawdust of a broad-leaved tree such as Japanese zelkova, sawdust of a coniferous tree such as Japanese cedar or pine, or bamboo sawdust can be used. A mixture of these sawdust may be used as well. As for the moisture content of the sawdust, a wide variety of sawdust ranging from dry sawdust from which moisture has been evaporated to moisture-containing sawdust, such as sawdust having a moisture content of about 60%, can be used.

As the phosphoric acid compound, phosphoric acid, polyphosphoric acid, pyrophosphoric acid, metaphosphoric acid, a salt thereof (e.g., sodium phosphate or calcium phosphate), or a mixture thereof can be used. When phosphoric acid is used as the phosphoric acid compound, it can be used in the form of an aqueous phosphoric acid solution, and the concentration thereof may be, for example, 50 to 90% by mass.

The phosphoric acid compound and the sawdust are mixed such that the mass ratio of phosphoric acid contained in the phosphoric acid compound in a dry state and the sawdust in a dry state (phosphoric acid/sawdust) is preferably 1.4 to 2.2, more preferably 1.5 to 2.0. The mixing may be performed in a uniform manner using a common stirrer. The temperature of the resulting mixture during the mixing is not particularly limited, and the mixing may be performed with or without heating. When heating is performed, the mixing may be performed with heating such that the resulting mixture has a temperature of, for example, 30 to 100°C.

[Step (ii)]

Subsequently, the thus obtained mixture is heated to reduce the mass of phosphoric acid and sawdust in the mixture at a mass reduction rate of 5% by mass or higher, preferably 8% by mass or higher, more preferably 10% by mass or higher, particularly preferably 11% by mass or higher, but 20% by mass or lower, preferably 19% by mass or lower, more preferably 18% by mass or lower, particularly preferably 17% by mass or lower, based on a dry-state total mass of phosphoric acid and sawdust (i.e. a total mass of phosphoric acid in a dry state and sawdust in a dry state).

The mass of phosphoric acid and sawdust in a dry state will now be described. In a case where the phosphoric acid compound is used in the form of an aqueous solution, the phosphoric acid concentration in the aqueous solution of the phosphoric acid compound is measured, and the mass of phosphoric acid contained in the aqueous solution, which is calculated from the thus measured concentration, is defined as the mass of phosphoric acid in a dry state. Similarly, in a case where the phosphoric acid compound is used in the form of a phosphoric acid solution in which a solvent other than water such as an alcohol is used, the phosphoric acid concentration in the phosphoric acid compound solution is measured, and the mass of phosphoric acid contained in the solution, which is calculated from the thus measured concentration, is defined as the mass of phosphoric acid in a dry state. In a case where the phosphoric acid compound is used in a nonsolution form, for example, (I) when the phosphoric acid compound is used as a solid which is a hydrate (i.e. a moisture-containing phosphoric acid compound), a certain amount of the same substance as the phosphoric acid compound to be used is weighed and dissolved in water to prepare an aqueous solution, the phosphoric acid concentration in the thus obtained aqueous phosphoric acid compound solution is measured, the mass of phosphoric acid per a certain amount of the phosphoric acid compound is calculated from the thus measured concentration, the mass of phosphoric acid contained in the phosphoric acid compound to be used is calculated from the thus calculated value, and the thus obtained value is defined as the mass of phosphoric acid in a dry state; or (II) when the phosphoric acid compound is used as a solid which contains no moisture (e.g., when the phosphoric acid compound is a phosphoric acid salt such as calcium phosphate), a value obtained by subtracting the mass of the salt moiety from the mass of the phosphoric acid salt is defined as the mass of phosphoric acid in a dry state. The "mass of sawdust in a dry state" refers to the mass of sawdust in a state of being dried (by itself) to a constant mass (complete dryness) at $115°C \pm 5°C$. It is noted here that the mass may be deemed to be constant when the change in the mass reduction over time due to drying is less than 0.5% by mass in a period of 2 hours.

As a heating apparatus, any heating apparatus can be used as long as it does not cause a large bias in the mass reduction by generating extreme temperature unevenness in the mixture. Examples of such an apparatus include a circulation-type dryer, an oven, and a rotary kiln. In order to achieve uniform heating, the mixture may be heated with stirring as appropriate. Mixing and heating of the phosphoric acid compound and sawdust cause dehydration and condensation of cellulose or lignin contained in the sawdust; therefore, the mass is consequently further reduced than a case where the phosphoric acid compound and the sawdust are heat-dried individually.

An excessively low heating temperature is not preferred since it does not facilitate a dehydration-condensation reaction of the sawdust by the phosphoric acid compound, which is required for the formation of a prescribed amount of a carbonaceous structure of the sawdust, and the resulting reaction product has a low density and is unsuitable for molding. In addition, the mass reduction takes time, and the production efficiency is thus low. On the other hand, when the heating temperature is excessively high, heating unevenness is likely to be generated, and an excessive mass reduction is thus more likely to occur. Accordingly, from the viewpoint of allowing the reaction to proceed uniformly and efficiently as well as the viewpoint of controlling the amount of the carbonaceous structure of the sawdust to be appropriate for molding in the below-described step (iii), the heating temperature is preferably 110 to 180°C, more preferably 115 to 175°C, particularly preferably 140 to 175°C.

In one embodiment of the present invention, the mixture obtained in the step (i) is kneaded simultaneously with the heating in the step (ii), in an independent step between the step (ii) and the step (iii), or immediately before the molding in the step (iii).

By this kneading, the sawdust is pulverized and homogenization of the mixture is facilitated. For the kneading, a common kneader can be used. The temperature of the mixture during the kneading is not particularly limited. When the kneading is performed simultaneously with the heating in the step (ii), the heating temperature may be as described above. When the kneading is performed in an independent step between the step (ii) and the step (iii), the kneading may be performed in a state where the temperature is lowered after the heating treatment of the step (ii) (e.g., at a temperature lower than the heating temperature, or at normal temperature), or the kneading may be performed at a temperature higher than normal temperature by heating again after the temperature is reduced after the heating treatment. The kneading to be performed immediately before the molding in the step (iii) is, for example, kneading with the use of a kneading extrusion granulator or the like.

[Step (iii)]

Subsequently, the mixture is molded. For this molding, a common extrusion granulator or tableting machine can be used. In order to uniformly mold the mixture without forming voids inside the resulting molded product, the molding may be performed in multiple stages. From the viewpoint of ease to obtain excellent adsorption performance, desorption performance, air permeability or low fine powder content, the molded product is preferably in the form of granules having a uniform size, particularly preferably in the form of pellets. When the activated carbon is in the form of pellets, the dimensions thereof is as described above in the section of [Activated Carbon].

[Step (iv)]

The thus obtained molded product is heated in the presence of oxygen and thereby oxidized. For this oxidation, a common heating apparatus such as a rotary kiln or a heating furnace can be used. As an oxygen-containing gas circulated in the heating apparatus, air can be used. A circulation gas is circulated at a rate of, for example, 5 to 75 mL/min, preferably 10 to 50 mL/min, with respect to 1 g of the molded product. The oxidation temperature is, for example, 180 to 450°C, preferably 225 to 350°C. The oxidation time varies depending on the oxidation temperature and the like; however, it is usually 0.5 to 4 hours, preferably 1 to 3.5 hours.

In the present invention, the mass reduction rate in the step (ii) is not less than 5% by mass, preferably not less than 8% by mass, more preferably not less than 10% by mass, particularly preferably not less than 11% by mass, but is 20% by mass or less, preferably 19% by mass or less, more preferably 18% by mass or less, particularly preferably 17% by mass or less, from the above-described basis, and this mass reduction rate is higher than the heating mass reduction rates in Patent Documents 2 and 3. In these Patent Documents, a material containing moisture or a volatile component which is volatilized to a certain extent on heating is molded, and water is added to improve the moldability when the heating mass reduction rate is increased; however, in the present invention, even without an addition of water, a final shape can be maintained by performing the oxidation step of bringing the molded product into contact with oxygen at a reasonably high temperature. In addition, by combining the heating step (ii) that yields a high mass reduction rate with the above-described oxidation step (iv), an activated carbon having pore characteristics that can achieve both a high butane adsorption performance and a low butane residual amount increase rate can be obtained.

[Step (v)]

The thus oxidized molded product is calcined in an atmosphere of an inert gas or a gas that does not react with the oxidized molded product at a calcining temperature. This calcining step (v) can be performed continuously from the oxidation step (iv) by switching the oxygen-containing gas circulated in the heating apparatus such as a rotary kiln used for performing the oxidation step (iv) to an inert gas (e.g., nitrogen, argon, or a mixture thereof) or a gas that does not react with the oxidized molded product at a calcining temperature (e.g., carbon dioxide, carbon monoxide, or a mixture thereof), and this method is preferred from the viewpoint of productivity. Needless to say, the calcining may be performed using a common heating apparatus different from the one used in the oxidation step (iv). The calcining is preferably performed at a temperature of 450 to 550°C for 1 to 2.5 hours. When the oxidation step and the calcining step are performed in the same heating apparatus and the calcining temperature is higher than the oxidation temperature, the calcining may be performed by, for example, increasing the temperature inside the heating apparatus at a temperature increase rate of 1 to 10°C/min (e.g., 4°C/min). After the completion of the calcining, the molded product is allowed to cool in the atmosphere of an inert gas or a gas that does not react with the oxidized molded product at the calcining temperature, and subsequently taken out once the temperature inside the heating apparatus is reduced to 100°C or lower.

[Step (vi)]

The thus calcined molded product is washed with water to remove the phosphoric acid compound. If necessary, the molded product may be washed with boiling water to facilitate the removal of the phosphoric acid compound. The molded product is repeatedly washed with water such that the water used for the washing eventually has a pH of 6 or higher.
The activated carbon of the present invention can be obtained by drying the thus waterwashed molded product. A drying method is not particularly limited, and the drying may be performed under an atmosphere of air, an inert gas (e.g., nitrogen) or a mixture thereof, using a common dryer. From the viewpoints of production efficiency and safety, the drying temperature is usually 60 to 150°C, preferably 70 to 140°C. The drying time varies depending on the drying temperature and the like; however, it is usually 0.1 to 36 hours, preferably 0.5 to 24 hours.
The activated carbon of the present invention that is obtained in the above-described manner has the specific BET specific surface area (A) and the specific pore volume ratio (B)/(C) and, therefore, can have a high butane saturated adsorption rate in combination with a small butane residual amount even after repeated adsorption-desorption cycles.

EXAMPLES

The present invention will now be described in more detail by way of Examples thereof; however, the present invention is not restricted thereto by any means. The properties and performance of each activated carbon obtained in Examples and Comparative Examples were determined as follows.

[BET Specific Surface Area (A) Determined from Carbon Dioxide Adsorption Isotherm]

For each activated carbon, an adsorption-desorption isotherm was obtained by measuring the adsorption and desorption of carbon dioxide at 273 K under a relative pressure ($p/p_0$) of 0.00075 to 0.030 using a gas adsorption measurement apparatus (AUTOSORB-iQ MP-XR, manufactured by Quantachrome Corporation). The thus obtained adsorption isotherm was analyzed by the BET method using the data obtained in a ($p/p_0$) range of 0.0247 to 0.0285 to calculate the BET specific surface area (A).
[Pore Volume (B) at Pore Diameter of 0.4 to 0.7 nm, Pore Volume (C) at Pore Diameter of 0.7 to 1.1 nm, and Pore Volume (D) at Pore Diameter of 0.6 to 0.7 nm]
The adsorption-desorption isotherm obtained in the above-described manner was analyzed in accordance with a grand canonical Monte Carlo method by applying "$CO_2$ at 273 K on carbon" as a calculation model to determine the pore size distribution, and the pore volumes (B) to (D) in the respective pore diameter ranges were calculated.

[BET Specific Surface Area (E) Determined from Nitrogen Adsorption Isotherm]

For each activated carbon, an adsorption isotherm was obtained by measuring the adsorption of nitrogen at 77 K under a relative pressure ($p/p_0$) of 0.001 to 0.95 using a gas adsorption measurement apparatus (BELSORP 28SA, manufactured by MicrotracBEL Corp.). The thus obtained adsorption isotherm was analyzed by the BET method using the data obtained in a ($p/p_0$) range of 0.05 to 0.15 to calculate the BET specific surface area (E).

[Packing Density]

The packing density was measured in accordance with ASTM D2854.

[Butane Saturated Adsorption Rate]

The butane saturated adsorption rate was measured in accordance with ASTM D5228.

[Butane Residual Amount Increase Rate and Butane Adsorption Amount Reduction Rate]

Each activated carbon was weighed in an amount of 250 mL based on the packing density of the activated carbon that was measured in accordance with ASTM D2854. The weighed activated carbon was packed into a canister container having a ratio of the length L with respect to the diameter D, L/D, of 3.5, and a total mass $W_1$ of the activated carbon and the canister container was measured. Subsequently, at a temperature of 25°C, an adsorption gas (a mixed gas of *n*-butane and air, which had an *n*-butane volume ratio of 50%) was circulated into the canister container through

a port $P_1$ at a rate of 300 mL/min, and the adsorption gas was allowed to adsorb to the activated carbon. The circulation of the adsorption gas was terminated once the butane concentration discharged from a port $P_2$ on the opposite side of the port $P_1$ reached 5,000 ppm, and a total mass $W_2$ of the activated carbon and the canister container after the adsorption operation was measured. A difference in total mass ($W_2$ - $W_1$) corresponds to the butane adsorption amount in the first cycle.

Then, the gas flow path was switched from adsorption to desorption, and a desorption gas (air) was circulated into the canister container through the port $P_2$ at a temperature of 25°C and a rate of 2.6 L/min to perform desorption of adsorbed butane. A total mass $W_3$ of the canister container and the activated carbon was measured when 300 bed volumes of the desorption gas had been circulated. A difference in total mass ($W_3$ - $W_1$) corresponds to the butane residual amount in the first cycle.

Up to 100 adsorption-desorption cycles, in which the above-described process from adsorption to desorption including the measurement of total mass was defined as one cycle, were performed. The desorption performance of the activated carbon was evaluated based on the butane residual amount increase rate calculated by the following formula.

[Formula 2]
Butane residual amount increase rate (%)
= {("Average value of butane residual amount in 96th to 100th cycles" - "Average value of butane residual amount in 2nd to 6th cycles")/"Average value of butane residual amount in 2nd to 6th cycles"} × 100

Further, the butane adsorption amount reduction rate was calculated by the following formula.

[Formula 3]
Butane adsorption amount reduction rate (%)
= {("Average value of butane adsorption amount in 2nd to 6th cycles" - "Average value of butane adsorption amount in 96th to 100th cycles")/"Average value of butane adsorption amount in 2nd to 6th cycles"} × 100

Example 1

A mixture, which was obtained by mixing 576.9 g (100 parts by mass in terms of dry solid mass) of pine sawdust (moisture content: 48% by mass) and 564.7 g [160 parts by mass in terms of dry solid mass (concentration: 100% by mass)] of an aqueous phosphoric acid solution (concentration: 85% by mass) [mass ratio of phosphoric acid and sawdust (phosphoric acid/sawdust) = 1.6], was heated in a circulation-type dryer set at 175°C such that the mass reduction rate from the solid mass used as a reference (100 parts by mass + 160 parts by mass = 260 parts by mass) was 16.0% by mass. The heating was performed for about 5 hours while stirring the mixture at hourly intervals.

The thus mass-reduced mixture was kneaded. The sawdust was pulverized and homogenized by this kneading and, once the mixture started to exhibit cohesiveness, the mixture was molded into the form of pellets using an extrusion granulator.

The thus obtained pellets were loaded to a rotary kiln, and the temperature was increased to 300°C at a rate of 4°C/min while circulating air at a rate of 25 mL/min per 1 g of the pellets, and subsequently maintained for 3 hours to oxidize the pellets.

Then, the circulating gas was switched from air to nitrogen, and the temperature was further increased to 500°C at a rate of 4°C/min while circulating nitrogen at a rate of 25 mL/min per 1 g of the pellets, and subsequently maintained for 2 hours to calcine the pellets.

The thus calcined pellets were washed with water and dried, whereby an activated carbon was obtained.

Examples 2 to 7 and Comparative Examples 1 and 2

Each activated carbon was obtained in the same manner as in Example 1, except that the heating temperature in the mass reduction, the mass reduction rate, and/or the oxidation temperature were changed as shown in Table 1.

Comparative Example 3

An activated carbon was obtained in the same manner as in Example 1, except that the mass ratio of phosphoric acid and sawdust, the heating temperature in the mass reduction, and the mass reduction rate were changed as shown in Table 1. Since the heating did not reduce the mass to below the reference mass, the mass reduction rate from the reference mass is expressed in a negative value.

Comparative Example 4

As an activated carbon, a wood-derived granular activated carbon activated with phosphoric acid, "BAX-1500" manufactured by Westvaco Corporation, was used.
Table 1

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| **Adsorption-desorption performance** | | | | | | | | | | | | |
| Butane adsorption amount reduction rate | % | 0.2 | 4.1 | 0.7 | 1.2 | 3.1 | 1.4 | 4.8 | 4.8 | 8.8 | 12.9 | 0.2 |
| Average value of butane adsorption amount in 96th to 100th cycles | g | 16.32 | 15.69 | 14.68 | 16.20 | 16.37 | 16.43 | 13.82 | 13.88 | 14.44 | 12.69 | 16.52 |
| Average value of butane adsorption amount in 2nd to 6th cycles | g | 16.35 | 16.36 | 14.79 | 16.40 | 16.90 | 16.66 | 14.52 | 14.58 | 15.84 | 14.57 | 16.55 |
| Butane residual amount increase rate | % | 2.3 | 5.1 | 9.5 | 10.3 | 11.9 | 13.0 | 13.0 | 17.1 | 18.7 | 20.6 | 10.6 |
| Average value of butane residual amount in 96th to 100th cycles | g | 13.23 | 14.36 | 14.24 | 16.01 | 17.08 | 17.17 | 14.99 | 16.36 | 18.32 | 17.51 | 16.26 |
| Average value of butane residual amount in 2nd to 6th cycles | g | 12.93 | 13.66 | 13.00 | 14.52 | 15.26 | 15.20 | 13.26 | 13.97 | 15.44 | 14.52 | 14.70 |
| Butane saturated adsorption rate | % by mass | 72.0 | 63.9 | 72.8 | 66.5 | 69.7 | 71.0 | 73.1 | 63.1 | 63.0 | 57.4 | 59.5 |
| **Pore structure properties** | | | | | | | | | | | | |
| Packing density | g/mL | 0.252 | 0.283 | 0.234 | 0.270 | 0.267 | 0.264 | 0.241 | 0.249 | 0.297 | 0.363 | 0.316 |
| BET specific surface area (E) | m²/g | 2,639 | 2,371 | 2,657 | 2,353 | 2,460 | 2,642 | 2,280 | 2,636 | 2,225 | 2,432 | 2123 |
| Pore volume (D) | mL/g | 0.045 | 0.045 | 0.050 | 0.047 | 0.057 | 0.053 | 0.052 | 0.058 | 0.053 | 0.060 | 0.043 |
| (A) × (B)/(C) | m²/g | 897 | 843 | 1,038 | 827 | 1,049 | 1,004 | 908 | 1,062 | 1,092 | 1,054 | 809 |
| Pore volume ratio (B)/(C) | - | 0.518 | 0.545 | 0.595 | 0.551 | 0.597 | 0.600 | 0.624 | 0.549 | 0.596 | 0.645 | 0.659 |
| Pore volume (C) | mL/g | 0.228 | 0.222 | 0.220 | 0.214 | 0.226 | 0.220 | 0.205 | 0.264 | 0.228 | 0.234 | 0.164 |
| Pore volume (B) | mL/g | 0.118 | 0.121 | 0.131 | 0.118 | 0.135 | 0.132 | 0.128 | 0.145 | 0.136 | 0.151 | 0.108 |
| BET specific surface area (A) | m²/g | 1,733 | 1,547 | 1,744 | 1,499 | 1,756 | 1,674 | 1,454 | 1,934 | 1,830 | 1,634 | 1,228 |
| **Production conditions** | | | | | | | | | | | | |
| Oxidation temperature | °C | 300 | 300 | 350 | 250 | 300 | 300 | 225 | 300 | 300 | 300 | - |
| Mass reduction rate from reference | % by mass | 16.0 | 13.0 | 5.7 | 8.3 | 19.6 | 5.1 | 5.7 | 11.5 | 21.3 | -3.9 | - |
| Heating temperature | °C | 175 | 150 | 140 | 115 | 150 | 175 | 140 | 100 | 200 | 115 | - |
| Phosphoric acid/sawdust | - | 1.6 | 1.6 | 1.6 | 1.6 | 1.6 | 1.6 | 1.6 | 1.6 | 1.6 | 1.2 | - |

As shown in Table 1, the activated carbons having the specific BET specific surface area (A) and the specific pore volume ratio (B)/(C) (Examples 1 to 7) exhibited a high butane saturated adsorption rate in combination with a small butane residual amount (a low butane residual amount increase rate) even after the repeated adsorption-desorption cycles.

On the other hand, the activated carbons which did not have the specific BET specific surface area (A) or the specific pore volume ratio (B)/(C) (Comparative Examples 1 to 4) exhibited a lower butane saturated adsorption rate and a higher butane residual amount increase rate than the activated carbons of Examples.

INDUSTRIAL APPLICABILITY

The activated carbon of the present invention has a high butane saturated adsorption rate and a low butane residual amount increase rate, and thus exhibits excellent desorption performance in addition to excellent adsorption performance. Therefore, the activated carbon of the present invention is useful as an adsorbent for gas adsorption. Moreover, the activated carbon of the present invention maintains excellent desorption performance even after repeated adsorption-desorption cycles in particular; therefore, it is useful as an adsorbent for, for example, automobile canisters.

**Claims**

1.  An activated carbon, having a BET specific surface area (A) of 1,250 to 1,800 $m^2$/g as determined from a carbon dioxide adsorption isotherm, and a ratio (B)/(C) of 0.640 or lower between a pore volume (B) mL/g at a pore diameter of 0.4 to 0.7 nm and a pore volume (C) mL/g at a pore diameter of 0.7 to 1.1 nm as determined by performing a grand canonical Monte Carlo simulation on a carbon dioxide adsorption-desorption isotherm.

2.  The activated carbon according to claim 1, wherein the BET specific surface area (A), the pore volume (B), and the pore volume (C) satisfy a relationship represented by the following formula:

$$(A) \times (B)/(C) \leq 1,050.$$

3.  The activated carbon according to claim 1 or 2, wherein the pore volume (B) is 0.135 mL/g or less.

4.  The activated carbon according to any one of claims 1 to 3, wherein a pore volume (D) at a pore diameter of 0.6 to 0.7 nm, which is determined by performing the grand canonical Monte Carlo simulation on the carbon dioxide adsorption-desorption isotherm, is 0.050 mL/g or less.

5.  The activated carbon according to any one of claims 1 to 4, which is in the form of pellets.

6.  The activated carbon according to any one of claims 1 to 5, which is a phosphoric acid-activated carbon.

7.  A method of producing the activated carbon according to claim 6, the method comprising:

    (i) the step of mixing sawdust with a phosphoric acid compound;
    (ii) the step of heating the resulting mixture to reduce the mass of phosphoric acid and sawdust in the mixture by 5 to 20% by mass based on a dry-state total mass of phosphoric acid and sawdust;
    (iii) the step of molding the thus mass-reduced mixture;
    (iv) the step of oxidizing the thus obtained molded product by heating in the presence of oxygen;
    (v) the step of calcining the thus oxidized molded product in an atmosphere of an inert gas or a gas that does not react with the oxidized molded product at a calcining temperature; and
    (vi) the step of water-washing and then drying the thus calcined molded product

8.  The method according to claim 7, comprising kneading the mixture obtained in the step (i) simultaneously with the heating in the step (ii), in an independent step between the step (ii) and the step (iii), or immediately before the molding in the step (iii).

9.  The activated carbon according to any one of claims 1 to 6, which is an activated carbon for an automobile canister.

## INTERNATIONAL SEARCH REPORT

International application No.

PCT/JP2020/008740

### A. CLASSIFICATION OF SUBJECT MATTER
Int.Cl. C01B32/318(2017.01)i, B01J20/20(2006.01)i, B01J20/28(2006.01)i, B01J20/30(2006.01)i
FI: C01B32/318, B01J20/20B, B01J20/28Z, B01J20/30
According to International Patent Classification (IPC) or to both national classification and IPC

### B. FIELDS SEARCHED

Minimum documentation searched (classification system followed by classification symbols)
Int.Cl. C01B32/00-32/991, B01J20/20-20/28, B01J20/30-20/34

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 11-349320 A (MITSUBISHI CHEMICAL CORPORATION) 21.12.1999 (1999-12-21), claims, paragraphs [0001]-[0021] | 1-9 |
| X | JP 2000-313611 A (MITSUBISHI CHEMICAL CORPORATION) 14.11.2000 (2000-11-14), claims, paragraphs [0001]-[0014], [0017]-[0022], [0026]-[00333] | 1-9 |
| A | JP 6-9208 A (WESTVACO CORP.) 18.01.1994 (1994-01-18), entire text | 1-9 |
| A | WO 2004/110928 A1 (KURARAY CHEMICAL CO., LTD.) 23.12.2004 (2004-12-23), entire text | 1-9 |
| A | JP 2006-213544 A (KURARAY CHEMICAL CO., LTD.) 17.08.2006 (2006-08-17), entire text | 1-9 |
| A | JP 2001-240407 A (KURARAY CHEMICAL CO., LTD.) 04.09.2001 (2001-09-04), entire text | 1-9 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21.04.2020 | 28.04.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/008740 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2013-530114 A (SGL CARBON SE) 25.07.2013 (2013-07-25), entire text | 1-9 |
| A | JP 2005-21750 A (NISSAN MOTOR CO., LTD.) 27.01.2005 (2005-01-27), entire text | 1-9 |

Form PCT/ISA/210 (second sheet) (January 2015)

INTERNATIONAL SEARCH REPORT

Information on patent family members

International application No.

PCT/JP2020/008740

```
JP 11-349320 A     21.12.1999    (Family: none)

JP 2000-313611 A   14.11.2000    (Family: none)

JP 6-9208 A        18.01.1994    US 005204310 A1
                                 entire text
                                 EP 000557208 A1

WO 2004/110928 A1  23.12.2004    US 2006-0141256 A1
                                 entire text

JP 2006-213544 A   17.08.2006    US 2009-0038477 A1
                                 entire text
                                 CN 001815007 A

JP 2001-240407 A   04.09.2001    (Family: none)

JP 2013-530114 A   25.07.2013    US 2013-0077207 A1
                                 entire text
                                 EP 002571806 A1

JP 2005-21750 A    27.01.2005    (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H656416 A
- WO 201821246 A
- JP H2167809 A